# EUROPÄISCHE PATENTSCHRIFT

(11) **EP 1 101 105 B1**
(45) Veröffentlichungstag und Bekanntmachung des Hinweises auf die Patenterteilung: **17.09.2003**
(21) Anmeldenummer: 99947241.8
(22) Anmeldetag: 19.07.1999
(51) Int. Cl.: G01N 29/26

(54) **VERFAHREN UND VORRICHTUNG ZUR DETEKTION EINES RISSES IN EINEM EISENBAHNRAD**
METHOD AND DEVICE FOR DETECTING A CRACK IN A RAILWAY WHEEL
PROCEDE ET DISPOSITIF POUR DETECTER UNE FENTE DANS UNE ROUE DE VEHICULE FERROVIAIRE

(30) Priorität: 31.07.1998 DE 19834587
(43) Veröffentlichungstag der Anmeldung: 23.05.2001
(73) Patentinhaber: SIEMENS AKTIENGESELLSCHAFT, 80333 München (DE); intelligeNDT Systems & Services GmbH & Co. KG, 91058 Erlangen (DE)
(72) Erfinder: ACHTZEHN, Hans-Jürgen, D-91325 Adelsdorf (DE); MEIER, Rainer, D-91058 Erlangen (DE); MOHR, Friedrich, D-90482 Nürnberg (DE)
(74) Vertreter: Berg, Peter, Dipl.-Ing.
(86) Internationale Anmeldenummer: DE9902235
(87) Internationale Veröffentlichungsnummer: WO00008459

(56) Entgegenhaltungen:
- EP-A- 0 090 567
- EP-A- 0 114 595
- EP-A- 0 667 526
- WO-A-90/13814
- DE-A- 3 236 218
- DE-A- 3 241 200
- GB-A- 2 011 075

## Beschreibung

Die Erfindung liegt auf dem Gebiet der Sicherheitstechnik für Eisenbahnen.

Die Erfindung bezieht sich in einer ersten Variante auf ein Verfahren zur Detektion eines Risses in einem um eine Rotationsachse drehbaren Eisenbahnrad, wobei ein zur Einschaltung einer ersten Ultraschallwelle vorhandener Ultraschallwandler relativ zum Eisenbahnrad im wesentlichen kreisförmig um die Rotationsachse bewegt wird, und wobei die erste Ultraschallwelle durch die Lauffläche in das Eisenbahnrad eingeschallt wird. In einer zweiten Variante bezieht sich die Erfindung auf ein Verfahren zur Detektion eines Risses in einem um eine Rotationsachse drehbaren Eisenbahnrad, wobei ein zur Einschallung einer ersten Ultraschallwelle vorhandener Ultraschallwandler relativ zum Eisenbahnrad im wesentlichen kreisförmig um die Rotationsachse bewegt wird, und wobei die erste Ultraschallwelle in das Eisenbahnrad eingeschallt wird. Die Erfindung betrifft gleichfalls Vorrichtungen zur Durchführung der Verfahren der ersten bzw. zweiten Variante.

Die Eisenbahnräder von Eisenbahnzügen müssen in bestimmten Zeitabständen einer zerstörungsfreien Prüfung auf Fehler, insbesondere auf Risse oder Ausbrüche, unterzogen werden. Die Risse können unter anderem entstehen durch Werkstoffermüdung, durch thermische Beanspruchung infolge der Bremsvorgänge und durch Verformungsvorgänge infolge der Druckbelastung. Um Radbrüche und damit gegebenenfalls einhergehende fatale Folgeschäden auszuschließen, ist die wiederkehrende Prüfung in kurzen zeitlichen Abständen, z.B. alle drei bis fünf Tage, erforderlich. Dabei muß die zerstörungsfreie Prüfung schnell, d.h. für einen gesamten Zug in etwa einer Stunde, durchführbar sein.

In der US 5,349,861 ist eine Vorrichtung beschrieben zur automatischen Messung von Spannungen im Radkranz eines Eisenbahnrads, mit der Ultraschall durch eine Stirnseite des Radkranzes in das Eisenbahnrad einkoppelbar ist. Eine umfassende Rißprüfung ist damit nicht möglich.

Aus der WO 90/13814 ist ein Verfahren zur Detektion von Fehlern in Eisenbahnrädern bekannt, bei dem Ultraschall sowohl durch die Lauffläche als auch durch eine Stirnseite des Radkranzes in das Eisenbahnrad eingeschallt werden, während das Eisenbahnrad rotiert. Bei der aus der WO 90/13814 bekannten Vorgehensweise wird zwar bedingt durch die Rotation des Eisenbahnrads der gesamte Radumfang abgetastet, doch sind damit nur solche Risse sicher detektierbar, die einige wenige Orientierungen aufweisen.

Unter der Internet-Adresse
http://www.ndt.net/article/report/df97/hintze/hintze_d.htm wurde am 10.06.1998 um 10.13 Uhr ein Fachartikel von H. Hintze, Deutsche Bahn AG, publiziert, in dem ein Verfahren zur Ultraschallprüfung von Eisenbahnrädern mit Hilfe von Oberflächenwellen, sogenannten Rayleigh-Wellen, beschrieben ist. Dabei wird mit einem elektrodynamischen Wandler auf der Basis von Permanentmagneten (sogenannter EMUS, was für elektromagnetischer Ultraschallwandler steht) eine Ultraschall-Oberflächenwelle im Radmaterial erzeugt. Die Oberflächenwelle wird durch die Lauffläche eingekoppelt und breitet sich vom Wandler ausgehend beidseitig in einem oberflächennahen Bereich entlang der Lauffläche des Rads aus. Nach einem vollständigen Umlauf um das Rad wird die Rayleigh-Welle von einem anderen elektrodynamischen Wandler wieder empfangen. Die elektrodynamischen Wandler sind - in Fahrrichtung des Eisenbahnzugs beabstandet - in den Schienen eingebaut. Der Eisenbahnzug rollt mit geringer Geschwindigkeit über die Wandler hinweg.

Mit dieser Prüftechnik läßt sich nur die Lauffläche des Eisenbahnrads prüftechnisch erfassen, nicht aber eine Innenmantelfläche des Eisenbahnrads oder der Bereich um die Radnabe. Ein weiterer Nachteil dieser Technik besteht darin, daß die Eindringtiefe der Rayleigh-Welle gering ist (wenige Millimeter), so daß Risse mit geringer Tiefenausdehnung von solchen mit größerer Tiefenausdehnung nicht unterscheidbar sind. Ein weiterer gravierender Nachteil dieser Prüftechnik liegt darin begründet, daß der Verschleiß an der Radlauffläche infolge einer erhöhten Schallschwächung sehr großen Einfluß auf das Ausbreitungsvermögen der Rayleigh-Welle hat. Daraus ergibt sich, daß diese Prüftechnik bei neuen Rädern sehr gut funktioniert, bei älteren Rädern, insbesondere mit einer Laufleistung von mehreren 10.000 km, also gerade bei Eisenbahnrädern, bei denen vermehrt mit der Rißbildung zu rechnen ist, dagegen nicht mehr aussagekräftig ist und deshalb versagt.

Unter der Internet-Adresse
http://www.ndt.net/article/0698/salzb/salzb.htm wurde am 10.06.1998 um 10.10 Uhr ein Bericht über einen Vortrag auf der Jahrestagung der Deutschen Gesellschaft für zerstörungsfreie Werkstoffprüfung in Lindau vom 13. bis 15. Mai 1996, gehalten von H.-J. Salzburger und H. Hintze, veröffentlicht. In diesem Tagungsbericht ist ein Impulsecho-Prüfverfahren zur Detektion eines Risses in einem Eisenbahnrad beschrieben, bei dem von der Stirnseite des Eisenbahnrades aus mit linear polarisierten Transversalwellen senkrecht bezüglich der Stirnseite eingestrahlt wird.

Bei diesem Prüfverfahren wird die Schallschwächung von quer zum Riß polarisierten Wellen ausgenutzt. Es müssen also polarisierte Ultraschallwellen erzeugt werden, wozu wie bei dem erstgenannten Prüfverfahren elektromagnetisch arbeitende Ultraschallwandler (EMUS) nötig sind. Diese sogenannten EMUS-Wandler funktionieren bei heutigem Stand der Technik für die Rißprüfung an Eisenbahnrädern nicht ausreichend zuverlässig.

Bei dem letztgenannten Prüfverfahren wird das Eisenbahnrad auf einem Rollenbock mit Hilfe eines Treibrads gedreht und der EMUS-Wandler wird in radialer Richtung bewegt. Das Prüfverfahren hat den zusätzlichen Nachteil, daß ein möglicher Riß im wesentlichen nur bei einer radialen Orientierung, z.B. bei senkrechter Ausrichtung bezüglich der Laufrichtung der Lauffläche, erfaßbar ist.

Die Erfindung geht nun von der Überlegung aus, daß aufgrund der komplexen Form eines Eisenbahnrads mit einer Vielzahl möglicher Rißpositionen und Rißorientierungen zu rechnen ist. Bei der Prüfung müssen insbesondere solche Risse detektiert werden, die von einer äußeren Mantelfläche (Außenumfang), insbesondere der Lauffläche oder der Außenmantelfläche der Radnabe, oder von einer inneren Mantelfläche (Innenumfang), insbesondere am Radkranz oder an der Radnabe, ausgehen. Risse treten auch bevorzugt an solchen Stellen auf, an denen sich die Dicke des Eisenbahnrads ändert, also an den Übergangszonen vom Radkranz oder von der Radnabe zur Radscheibe.

Es besteht demzufolge ein Bedarf, ein Eisenbahnrad in zuverlässiger Weise derart zu prüfen, daß Risse in einer größeren Anzahl zu erwartender Positionen und Orientierungen zuverlässiger und schneller als mit den bekannten Prüfmethoden detektierbar sind. Der Erfindung liegt demzufolge die Aufgabe zugrunde, ein Verfahren als auch eine Vorrichtung zu diesem Zwecke anzugeben.

Die auf ein Verfahren bezogene Aufgabe wird bei einem Verfahren der eingangs genannten ersten Variante gemäß der Erfindung dadurch gelöst,
a) daß durch den Radkranz hindurch in die Radscheibe eingeschallt wird, und
b) daß die Einschallrichtung der ersten Ultraschallwelle in der Radscheibenebene geschwenkt wird.

Das Verfahren hat durch die Kombination einer Veränderung der Einschallstelle mit einer Veränderung der Einschallrichtung den Vorteil, daß einerseits weitestgehend das gesamte Volumen des Eisenbahnrads prüftechnisch erfaßbar ist und andererseits ein Riß mit weitestgehend allen, mit relevanter Wahrscheinlichkeit auftretenden Orientierungen detekierbar ist. Dabei geht die Erfindung weiterhin von der Überlegung aus, ein und denselben Riß ggf. mehrfach, aus jeweils unterschiedlichen Richtungen anzuschallen. Die Wahrscheinlichkeit ist sehr groß, daß der Riß bei einer dieser Richtungen ein gut meßbares Empfangssignal auslöst. Mit dem Verfahren nach der Erfindung können ungefährliche, d.h. die Sicherheit nicht gefährdende Risse, von ungefährlichen Rissen unterschieden werden.

Würde man den Riß bei nur einer einzigen verfügbaren Anschallrichtung detektieren wollen, dann müßte die Prüfempfindlichkeit derart stark erhöht sein, daß die Prüfung äußerst störanfällig wäre. Ohne den Schwenk der Einschallrichtung wäre zudem eine Unzahl von Ultraschallprüfköpfen erforderlich.

Bei dem Verfahren der ersten Variante wird die Einschallrichtung konkret in der Radscheibenebene, die eine erste Schwenkebene darstellt, geschwenkt, was den Vorteil hat, daß während des Schwenkens ein besonders großes Volumen abtastbar ist. In vorteilhafter Weise wird dabei Ultraschall durch die Lauffläche in den Radkranz und durch diesen hindurch bis in die Radscheibe eingeschallt. Bei Einschallung durch die Lauffläche ist der Schwenk in der Radscheibenebene in einfacher Weise durchführbar. Dadurch sind außerdem die Lauffläche, der Radkranz und die Radscheibe in einem Arbeitsgang prüfbar.

Die verfahrensbezogene Aufgabe wird bezogen auf das eingangs genannte Verfahren der zweiten Variante gemäß der Erfindung dadurch gelöst,
a) daß die erste Ultraschallwelle durch eine Seite der Radscheibe in die Radnabe eingeschallt wird, und
b) daß die Einschallrichtung der ersten Ultraschallwelle unter einem näherungsweise unveränderten Winkel mit einer senkrecht auf der Seite der Radscheibe stehenden horizontalen Ebene geschwenkt wird.
Das Verfahren in der zweiten Variante ist bevorzugt zur Überprüfung eines radnabennahen Bereichs der Radscheibe und der Radnabe selbst geeignet. Infolge der Einschallung durch die Seite der Radscheibe muß das Eisenbahnrad zu seiner Überprüfung nicht von der Achse demontiert werden. Weiterhin gelten die Vorteile, insbesondere betreffend die Kombination einer Veränderung der Einschallstelle mit einer Veränderung der Einschallrichtung, auf die bei obigen Erläuterungen bezüglich des Verfahrens der ersten Variante hingewiesen wurde.

Vorzugsweise wird bei dem Verfahren der zweiten Variante die Einschallrichtung der ersten Ultraschallwelle mit einer Komponente in einer senkrecht auf der Rotationsachse stehenden ersten Schwenkebene geschwenkt. Dadurch ist eine besonders große Anzahl möglicher Rißorientierungen erfaßbar.

Der Schwenk der Einschallrichtung kann bei beiden Verfahrensvarianten simultan mit der kreisförmigen Bewegung durchgeführt werden, oder die kreisförmige Bewegung wird z.B. schrittweise durchgeführt, wobei nach jedem Schritt der Schwenk der Einschallrichtung stattfindet.

Die kreisförmige Bewegung kann bei beiden Verfahrensvarianten durch eine Bewegung des Ultraschallwandlers entlang einer Umfanglinie des Eisenbahnrads bei nicht gedrehtem Eisenbahnrad erzeugt sein. Sie kommt vorzugsweise durch eine Rotation des drehbar gelagerten Eisenbahnrads bei nicht um die Rotationsachse rotierendem Ultraschallwandler zustande. Das Eisenbahnrad kann auch in eine Fahrrichtung mit einer Fahrgeschwindigkeit rollen und der Ultraschallwandler mit der Fahrgeschwindigkeit in die Fahrrichtung mitbewegt werden.

Der kreisförmigen Bewegung kann bei beiden Verfahrensvarianten eine andere Bewegung überlagert sein.

Zum Empfang der ersten Ultraschallwelle kann bei beiden Verfahrensvarianten ein gesonderter Empfangs-Ultraschallwandler vorhanden sein.

Die nachfolgend aufgeführten Weiterbildungen und Ausgestaltungen beziehen sich auf die Verfahren nach beiden Varianten.

Nach einer ersten bevorzugten Weiterbildung der Verfahren wird die Einschallrichtung der ersten Ultraschallwelle nicht nur in der ersten Schwenkebene geschwenkt, sondern auch mit einer Komponente in einer parallel zur Rotationsachse orientierten zweiten Schwenkebene geschwenkt. Dadurch wird die Zahl der detektierbaren Rißorientierungen und -positionen vorteilhaft noch weiter erhöht.

Die Verfahren nach der Erfindung sind in vorteilhafter Weise dadurch weitergebildet,
- daß eine zweite Ultraschallwelle in das Eisenbahnrad eingeschallt und ein zu ihrer Einschallung vorhandener Ultraschallwandler in gleicher Weise wie der zur Einschallung der ersten Ultraschallwelle vorhandene Ultraschallwandler bewegt wird, und
- daß die Einschallrichtung der zweiten Ultraschallwelle senkrecht zur Radscheibenebene geschwenkt wird.

Die zweite Ultraschallwelle ermöglichst ein Einschallen an einer anderen Einschallstelle, d.h. insbesondere an einer anderen Außenfläche, wie die erste Ultraschallwelle, wodurch die Anzahl erfaßbarer Rißorientierungen und -positionen vorteilhaft weiter erhöht wird.

Zur Einschallung der ersten Ultraschallwelle und der zweiten Ultraschallwelle ist bevorzugt derselbe Ultraschallwandler vorhanden, der z.B. von einem Manipulator von der einen Einschallstelle zu einer anderen Einschallstelle bewegt wird.

Nach einer bevorzugten Ausgestaltung der Verfahren ist das Eisenbahnrad ein Monoblockrad (Vollrad).

Bevorzugt wird die erste Ultraschallwelle bzw. die zweite Ultraschallwelle elektronisch fokussiert.

Weiterhin bevorzugt wird die Lage des Fokus variiert. Das hat den Vorteil einer laufwegabhängig beeinflußbaren Prüfempfindlichkeit. Ferner wird der Vorteil erreicht, daß ein möglicher Riß aus einer noch größeren Anzahl von Richtungen anschallbar ist. Darüber hinaus ist die Ultraschallwelle auch in schwer zugängliche Bereiche mit unterschiedlichen Divergenzwinkeln und unterschiedlichen Bündeldurchmessern einschallbar, so daß ein noch größerer Volumenbereich im Eisenbahnrad prüfbar ist. Somit ist die Detektionswahrscheinlichkeit insgesamt weiter erhöht.

Weitere vorteilhafte Ausgestaltungen des Verfahrens nach der Erfindung betreffen den Ort und die Richtung der Einschallung der zweiten Ultraschallwelle.

Nach einer bevorzugten Ausgestaltung wird die zweite Ultraschallwelle durch die Lauffläche eingeschallt. Dabei wird bevorzugt durch die Lauffläche und durch den Radkranz hindurch in die Radscheibe eingeschallt. Ebenfalls bevorzugt wird durch die Lauffläche hindurch in die Übergangszone zwischen Radkranz und Radscheibe eingeschallt.

Vorzugsweise wird - insbesondere bei Einschallung in die Radscheibe - die Lage des Fokus bezüglich der Lauffläche derart variiert, daß die Schallbündelbreite der ersten Ultraschallwelle in der Übergangszone zwischen Radkranz und Radscheibe veränderlich ist.

Nach einer anderen bevorzugten Ausgestaltung wird die zweite Ultraschallwelle durch eine Seite der Radscheibe eingeschallt. Dabei wird bevorzugt durch die Seite der Radscheibe hindurch in die Radnabe eingeschallt. Weiterhin bevorzugt wird in die Übergangszone zwischen Radscheibe und Radnabe eingeschallt.

Bei einer anderen vorteilhaften Ausgestaltung der Verfahren wird die zweite Ultraschallwelle durch eine Seite des Radkranzes eingeschallt. Hierbei wird vorzugsweise durch die Seite des Radkranzes hindurch in die Übergangszone zwischen Radkranz und Radscheibe eingeschallt.

Die an unterschiedlichen Einschallstellen und/oder mit unterschiedlichen Einschallrichtungen von der ersten Ultraschallwelle bzw. der zweiten Ultraschallwelle erzeugten Empfangssignale werden vorzugsweise bildgebend überlagert. Beispielsweise erfolgt die Überlagerung nach der Methode der Echo-Tomographie. Die Überlagerung wird vorteilhaft in einer Draufsicht auf eine Stirnseite des Eisenbahnrads dargestellt.

Die auf eine Vorrichtung zur Durchführung des Verfahrens der ersten Variante bezogene Aufgabe wird durch eine Vorrichtung gemäß Anspruch 18 gelöst.

Die bezüglich des Verfahrens genannten Vorteile gelten für die Vorrichtungen nach der Erfindung analog.

Vorzugsweise ist ein an der Lauffläche akustisch ankoppelbarer dritter Gruppenstrahler zur Einschallung einer dritten Schallwelle gemäß Anspruch 19 vorgesehen.

Eine andere vorteilhafte Weiterbildung der Vorrichtung weist einen an einer Stirnseite des Radkranzes akustisch ankoppelbaren vierten Gruppenstrahler zur Einschallung einer vierten Schallwelle gemäß Anspruch 20 auf.

Nach einer weiteren vorteilhaften Weiterbildung weist die Vorrichtung einen an einer Stirnseite der Radscheibe akustisch ankoppelbaren fünften Gruppenstrahler zur Einschallung einer fünften Schallwelle gemäß Anspruch 21 auf.

Einer oder mehrere der Gruppenstrahler kann/ können als eindimensionales Array ausgeführt sein, das im Vergleich zu einem zweidimensionalen Array kostengünstiger ist.

Bevorzugt sind mehrere Gruppenstrahler und/ oder Gruppenstrahler-Arrays auf einem gemeinsamen Prüfträger angeordnet.

Beispielsweise ist wenigstens ein Gruppenstrahler oder ein Gruppenstrahler-Array im Impuls-Echo-Modus betreibbar.

Nach einer Weiterbildung weist eine der Vorrichtungen eine Auswerteeinheit auf, der die Empfangssignale wenigstens eines der Gruppenstrahler bzw. der Gruppenstrahler-Arrays zuführbar sind, und die die an unterschiedlichen Einschallstellen und/oder mit unterschiedlichen Einschallrichtungen erzeugten Empfangssignale bildgebend überlagert.

Mehrere Ausführungsbeispiele einer Vorrichtung nach der Erfindung sind in schematischer Weise in den Figuren 1 bis 5 erläutert. Diese Figuren dienen auch der Erläuterung des Verfahrens nach der Erfindung. Es zeigen:
- FIG 1: ein erstes Ausführungsbeispiel einer Vorrichtung nach der Erfindung zur Prüfung eines Eisenbahnrads,
- FIG 2: einen Querschnitt entlang der Linie II-II durch die Vorrichtung und das Eisenbahnrad der Figur 1,
- FIG 3: ein zweites Ausführungsbeispiel einer Vorrichtung nach der Erfindung zur Prüfung eines Eisenbahnrads,
- FIG 4: einen Querschnitt entlang der Linie IV-IV durch die Vorrichtung und das Eisenbahnrad der Figur 3,
- FIG 5: ein drittes Ausführungsbeispiel einer Vorrichtung nach der Erfindung zur Prüfung eines Eisenbahnrads.

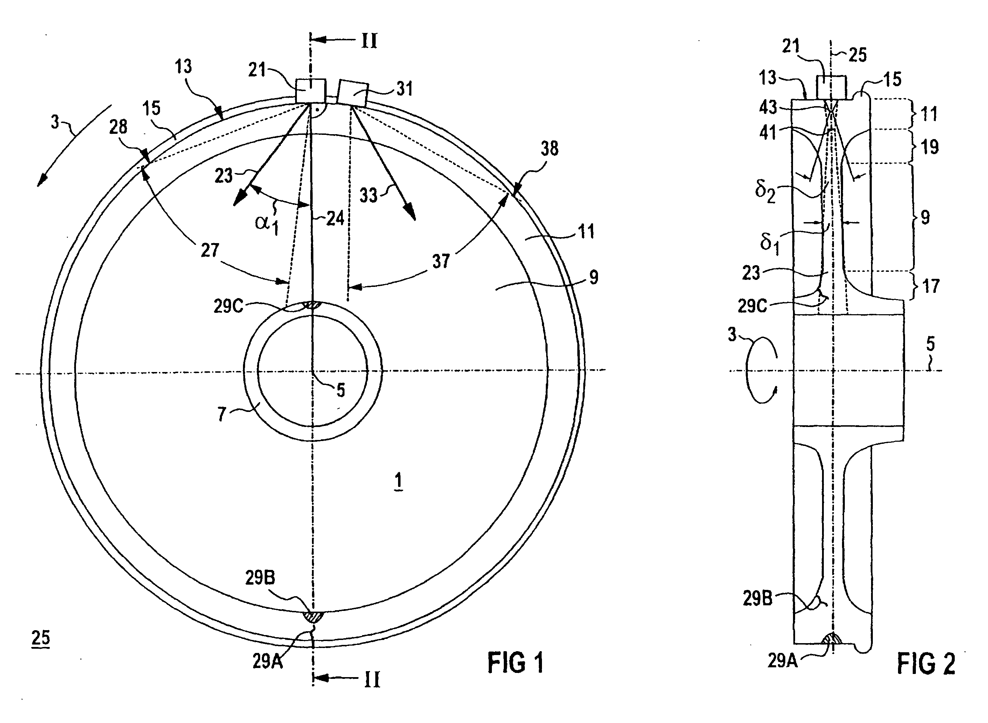

Figur 1 und Figur 2 in einer Querschnittsdarstellung entlang der Linie II-II zeigen ein Eisenbahnrad l (Monoblockrad), das in einer Drehrichtung 3 um eine Rotationsachse 5 rotiert. Das Eisenbahnrad 1 umfaßt eine Radnabe 7, eine Radscheibe 9, einen Radkranz 11 mit einer Lauffläche 13 sowie einen Spurkranz 15. Im Bereich der Radscheibe 9 ist das Eisenbahnrad 1 weniger breit als im Bereich der Radnabe 7 und des Radkranzes 11, so daß Übergangszonen 17, 19 mit veränderlicher Radbreite gebildet sind. Es handelt sich dabei um eine innere Übergangszone 17 zwischen der Radnabe 7 und der Radscheibe 9 sowie um eine äußere Übergangszone 19 zwischen der Radscheibe 9 und dem Radkranz 11.

An der Lauffläche 13 ist gemäß einem ersten Ausführungsbeispiel ein erster Gruppenstrahler 21 akustisch angekoppelt. Er ist mit seiner Einschallstelle in etwa zwischen den verlängert gedachten Stirnseiten der Radscheibe 9 auf der Lauffläche 13 positioniert. Von dem ersten Gruppenstrahler 21 wird eine erste Schallwelle 23 durch die Lauffläche 13 in die Radscheibe 9 eingeschallt. Die Einschallrichtung wird - zumindest mit einer Komponente - in einer ersten Schwenkebene 25, die bei Figur 1 durch die Zeichenebene gebildet ist, innerhalb eines Schwenkintervalls 27 geschwenkt, d.h. verändert. Die erste Schwenkebene 25 ist mit einer Radscheibenebene identisch. Man spricht in diesem Zusammenhang auch von einem "Vertikalschwenk", da ein erster Einschallwinkel α₁ (gemessen bezüglich einer ein Einfallslot bildenden Radiuslinie 24) innerhalb des Schwenkintervalls 27 variiert wird. Das Schwenkintervail 27 hat eine Breite von etwa 60° und ist in etwa derart justiert, daß ein Winkelbereich auf einer ersten Seite bezüglich der Radiuslinie 24, und zwar ein durch eine in Figur 1 linksseitige Stelle 28 auf der Lauffläche 13 und durch die Radnabe 7 definierter Winkelbereich, abgetastet wird. Der erste Einschallwinkel α₁ wird von etwa 0° bis etwa 60° variiert.

Bei kleinem Einschallwinkel α₁ wird mit longitudinaler Polarisation, bei großem Einschallwinkel α₁ mit transversaler Polarisation eingeschallt.

In Figur 1 sind mögliche Rißlagen 29A, 29B und 29C an der Lauffläche 13, am Innenumfang des Radkranzes 11 bzw. an der wellenabgewandten Mantelfläche (Außenmantelfläche) der Radnabe 7 eingezeichnet, die mit der Vorrichtung nach der Erfindung gut erfaßbar sind. Die Risse werden nämlich bei Durchführung des Verfahrens nach der Erfindung aus mehreren, unterschiedlichen Richtungen beschallt.

Zur Erhöhung der Detektionswahrscheinlichkeit weist die Vorrichtung einen weiteren ersten Gruppenstrahler 31 auf, der eine weitere erste Schallwelle 33 in das Eisenbahnrad 1 einschallt. Die Einschallrichtung der weiteren ersten Schallwelle 33 wird ebenfalls in der senkrecht auf der Rotationsachse 5 stehenden ersten Schwenkebene 25 geschwenkt, und zwar innerhalb eines Schwenkintervalls 37 mit einer Breite von etwa 60°. Mit diesem zweiten "Vertikalschwenk'' wird ein Winkelbereich auf der der ersten Seite gegenüberliegenden Seite, und zwar ein durch die Radnabe 9 und durch eine gegenüberliegende, in Figur 1 bezüglich der Radiuslinie 24 rechtsseitige Stelle 38 auf der Lauffläche 13 definierter Winkelbereich, geprüft.

In Figur 2 ist weiter dargestellt, wie die Lage eines Fokus 41, 43 der ersten Schallwelle 23 durch phasengesteuerte elektronische Ansteuerung des ersten Gruppenstrahlers 21 variiert wird. Die Variation des Fokus kann mittels elektronischer Ansteuerung auch über eine Veränderung der aktiven Schwingerfläche des Gruppenstrahler 31 erreicht werden, z.B. durch Zu-/Abschalten von Randelementen des Arrays.

Die Figur 2 zeigt einen ersten Fokus 41, der sich aus der natürlichen Fokussierung infolge der endlichen Querschnittsfläche (in Abstrahlrichtung) des ersten Gruppenstrahlers 21, also noch ohne elektronische Ansteuerung, ergibt. Ein zweiter Fokus 43 wird durch entsprechende Phasenansteuerung des ersten Gruppenstrahlers 21 erzeugt. Der zweite Fokus 43 liegt näher an der Lauffläche 13 und weist einen geringeren Bündelquerschnitt als der erste Fokus 41 auf. Damit geht einher, daß ein zweiter mit dem zweiten Fokus 43 verbundener Divergenzwinkel δ2 größer als der erste Divergenzwinkel δ1 ist. Bei Einstellung des ersten Fokus' 41 wird die erste Schallwelle 23 mit ihrem natürlichen ersten Divergenzwinkel δ1 weitgehend ungestört in die Radscheibe 9 eingestrahlt. Bei Einstellung des zweiten Fokus' 43 wird nur ein Teil der ersten Schallwelle 23 in die Radscheibe 9 eingestrahlt, und ein anderer Teil trifft von innen auf die Oberfläche der äußeren Übergangszone 19.

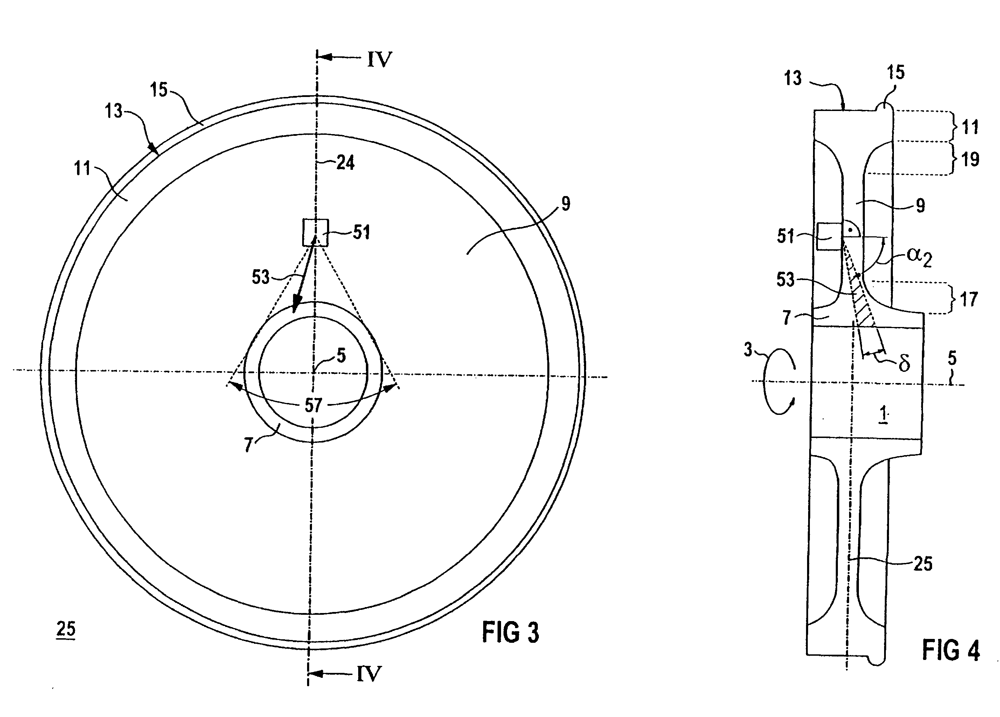

Figur 3 und Figur 4 in einer Querschnittsdarstellung entlang der Linie IV-IV zeigen ein zweites Ausführungsbeispiel einer Vorrichtung nach der Erfindung mit einem zweiten Gruppenstrahler 51, der durch eine Stirnseite der Radscheibe 9 eine zweite Schallwelle 53 unter einem zweiten Einschallwinkel α₂ in das Eisenbahnrad 1 einschallt. Die auf die erste Schwenkebene 25 projizierte Komponente der Einschallrichtung der zweiten Schallwelle 53 wird in dieser Schwenkebene 25 innerhalb eines Schwenkintervalls 57 mit einer Breite von etwa 60° geschwenkt. Dabei bleibt der zweite Einschallwinkel α₂ von etwa 70° näherungsweise unverändert, weshalb in diesem Zusammenhang auch von einem "Horizontalschwenk" oder von einem Schwenk des Schielwinkels gesprochen wird.

Der Divergenzwinkel δ der zweiten Schallwelle 52 bleibt weitgehend unverändert und beträgt etwa 5° bis 20°.

Das Schwenkintervall 57 des zweiten Gruppenstrahlers 51 ist derart justiert, daß ein bezüglich der Radiuslinie 24, auf der der zweite Gruppenstrahler 51 angeordnet ist, symmetrischer Winkelbereich abgetastet wird. Der zweite Gruppenstraher 51 strahlt durch die Radscheibe 9 in Richtung auf die innere Übergangszone 17 sowie in Richtung auf die Radnabe 7.

Es kann ein (nicht gezeigter) weiterer zweiter Gruppenstrahler vorhanden sein, der wie der zweite Gruppenstrahler 51 positioniert ist, statt dessen aber in Richtung auf die Lauffläche 13 schallt.

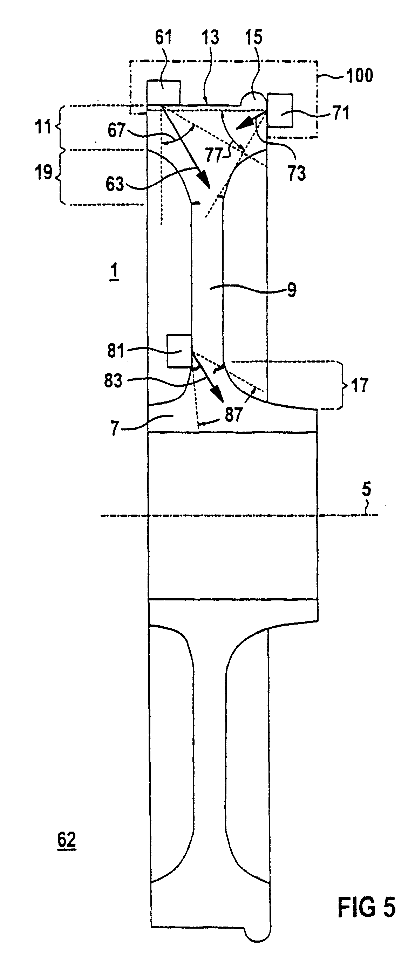

Das in Figur 5 dargestellte dritte Ausführungsbeispiel einer Vorrichtung nach der Erfindung zeigt Gruppenstrahler 61, 71, 81, die einen Winkelschwenk ("Vertikalschwenk") in einer parallel zur Rotationsachse 5 des Eisenbahnrads 1 orientierten zweiten Schwenkebene 62 durchführen, die durch die Zeichenebene der Figur 5 gebildet ist. Im gezeichneten Beispiel verläuft die zweite Schwenkebene 62 durch die Rotationsachse 5.

Ein dritter Gruppenstrahler 61 strahlt eine dritte Schallwelle 63 durch die Lauffläche 13 in die äußere Übergangszone 19 ein. Der dritte Gruppenstrahler 61 ist an dem dem Spurkranz 15 gegenüberliegenden Rand der Lauffläche 13 angeordnet. Die Einschallrichtung der dritten Schallwelle 63 wird innerhalb eines Schwenkintervalls 67 mit einer Breite von etwa 60° geschwenkt. Dieses Schwenkintervall 67 erstreckt sich von einer zur Rotationsachse 5 senkrecht stehenden Richtung hin zu einer bezüglich der Rotationsachse 5 schrägen Richtung.

Ein vierter Gruppenstrahler 71 strahlt eine vierte Schallwelle 73 durch die bezüglich einer Fahrrichtung des Eisenbahnrades 1 innengelegene Seite des Radkranzes 11 in das Eisenbahnrad 1 ein und ist dabei soweit als möglich am in radialer Richtung äußeren Rand des Radkranzes 11 oder des Spurkranzes 15 positioniert. Die vierte Schallwelle 73 schallt dabei in den Radkranz 11 und in die äußere Übergangszone 19 ein. Die Einschallrichtung der vierten Schallwelle 73 wird innerhalb eines Schwenkintervalls 77 mit einer Breite von etwa 60° variiert. Dieses Schwenkintervall 77 ist derart justiert, daß die Einschallrichtung der vierten Schallwelle 73 von einer weitgehend zur Rotationsachse 5 parallelen Richtung hin zu einer zur Rotationsachse 5 geneigten Richtung variiert wird.

Ein fünfter Gruppenstrahler 81 strahlt eine fünfte Schallwelle 83 durch eine Seite der Radscheibe 9 in das Eisenbahnrad 1 ein. Die Einschallstelle befindet sich in radialer Richtung von außen betrachtet unmittelbar vor der inneren Übergangszone 17. Ein Schwenkintervall 87 der Einschallrichtung der fünften Schallwelle 83 ist derart justiert, daß die Einschallrichtung über die weitgehend gesamte Intervallbreite von etwa 60° in Richtung auf die Radnabe 7 weist.

Der dritte Gruppenstrahler 61 und der vierte Gruppenstrahler 71 sind auf einem gemeinsamen Prüfträger 100 angeordnet, dem auch der fünfte Gruppenstrahler 81 zugeordnet sein kann.

Die Gruppenstrahler 21, 31, 51, 61, 71, 81 sind bezüglich der Rotationsachse 5 ortsfest, d.h. das rotierende Eisenbahnrad 1 bewegt sich mit der jeweiligen Einkoppelfläche unter dem jeweiligen Gruppenstrahler 21, 31, 51, 61, 71, 81 hinweg.

Der dritte Gruppenstrahler 61 kann als zweidimensionales Gruppenstrahler-Array ausgebildet sein. Er kann in Richtung der Rotationsachse 5 auf der Lauffläche 13 verfahrbar sein, so daß er auch zwischen den verlängert gedachten Seiten der Radscheibe 9, in Figur 5 also über der Radscheibe 9, auf der Lauffläche 13 positionierbar ist (wie der erste Gruppenstrahler 21 (siehe Figur 2)). Von dem dritten Gruppenstrahler 61 kann dann die erste Schallwelle 23 mit einem Schwenk in der ersten Schwenkebene 25 und die dritte Schallwelle 63 mit einem Schwenk in der zweiten Schwenkebene 62 eingeschallt werden, ohne daß hierzu ein gesonderter erster Gruppenstrahler 21 nötig wäre.

In gleicher Weise kann der fünfte Gruppenstrahler 81 als zweidimensionales Gruppenstrahler-Array ausgebildet und entlang einer Seite der Radscheibe 9 und ggf. entlang einer Seite des Radkranzes 11 verfahrbar sein, so daß er sowohl zur Einschallung der zweiten Schallwelle 53 mit einem Schwenk in der ersten Schwenkebene 25 als auch zur Einschallung der vierten Schallwelle 73 und/ oder der fünften Schallwelle 83 mit einem Schwenk in der zweiten Schwenkebene 62 in der Lage ist, ohne daß hierzu ein gesonderter zweiter Gruppenstrahler 51 erforderlich wäre.

Der dritte Gruppenstrahler 61 kann als Array zur Durchführung des Verfahrens der zweiten Variante statt an der Lauffläche 13 an der Seite der Radscheibe 9 angekoppelt sein. Der fünfte Gruppenstrahler 81 (Array) ist dann z.B. an einer Seite des Radkranzes (11) angekoppelt.

## Patentansprüche

1. Verfahren zur Detektion eines Risses (29A, 29B, 29C) in einem um eine Rotationsachse (5) drehbaren Eisenbahnrad (1), wobei ein zur Einschaltung einer ersten Ultraschallwelle (23, 33) vorhandener Ultraschallwandler (21, 31) relativ zum Eisenbahnrad (1) im wesentlichen kreisförmig um die Rotationsachse (5) bewegt wird, wobei die erste Ultraschallwelle (23, 33) durch die Lauffläche (13) in das Eisenbahnrad (1) eingeschallt wird, und wobei
durch den Radkranz (11) hindurch in die Radscheibe (9) eingeschallt wird, **dadurch gekennzeichnet,**
**daß** die Einschallrichtung der ersten Ultraschallwelle (23, 33) in der Radscheibenebene (25) geschwenkt wird.

2. Verfahren zur Detektion eines Risses (29A, 29B, 29C) in einem um eine Rotationsachse (5) drehbaren Eisenbahnrad (1), wobei ein zur Einschallung einer ersten Ultraschallwelle (53) vorhandener Ultraschallwandler (51) relativ zum Eisenbahnrad (1) im wesentlichen kreisförmig um die Rotationsachse (5) bewegt wird, wobei die erste Ultraschallwelle (53) in das Eisenbahnrad (1) eingeschallt wird, und wobei,
die erste Ultraschallwelle (53) durch eine Seite der Radscheibe (9) in die Radnabe (7) eingeschallt wird,
**dadurch gekennzeichnet,**
**dass** die Einschallrichtung der ersten Ultraschallwelle (53) unter einem näherungsweise unveränderten Winkel (α₂) mit einer senkrecht auf der Seite der Radscheibe (9) stehenden horizontalen Ebene geschwenkt wird.

3. Verfahren nach einem der Ansprüche 1 oder 2,
**dadurch gekennzeichnet, daß** die kreisförmige Bewegung durch eine Rotation des drehbar gelagerten Eisenbahnrads (1) bei nicht um die Rotationsachse (5) rotierendem Ultraschallwandler (21, 31; 51) zustande kommt.

4. Verfahren nach einem der Ansprüche 1 bis 3,
**dadurch gekennzeichnet,**
- **daß** eine zweite Ultraschallwelle (63, 73, 83) in das Eisenbahnrad (1) eingeschallt und ein zu ihrer Einschallung vorhandener Ultraschallwandler (61, 71, 81) in gleicher Weise wie der zur Einsehallung der ersten Ultraschallwelle (23, 33) vorhandene Ultraschallwandler die 21, 31) bewegt wird, und
- **daß** die Einschallrichtung der zweiten Ultraschallwelle (63, 73, 83) senkrecht zur Radscheibenebene (25) geschwenkt wird.

5. Verfahren nach Anspruch 4,
**dadurch gekennzeichnet, daß** zur Einschallung der ersten Ultraschallwelle (23, 33; 53) und der zweiten Ultraschallwelle (63, 73, 83) derselbe Utraschallwandler vorhanden ist.

6. Verfahren nach einem der Ansprüche 1 bis 5 oder 4 bis 5,
**dadurch gekennzeichnet, daß** die erste Ultraschallwelle (23) bzw. die zweite Ultraschallwelle elektronisch fokussiert wird.

7. Verfahren nach Anspruch 6,
**dadurch gekennzeichnet, daß** die Lage des Fokus variiert wird.

8. Verfahren nach einem der Ansprüche 4 bis 7,
**dadurch gekennzeichnet, daß** die zweite Ultraschallwelle (63) durch die Lauffläche (13) eingeschallt wird.

9. Verfahren nach Anspruch 8,
**dadurch gekennzeichnete daß** die zweite Ultraschallwelle (63) durch den Radkranz (11) hindurch in die Radscheibe (9) eingeschallt wird.

10. Varfahren nach einem der Ansprüche 8 oder 9,
**dadurch gekennzeichnet, daß** die zweite Ultraschallwelle (63) in die Übergangszone (19) zwischen Radkranz (11) und Radscheibe (9) eingeschallt wird.

11. Verfahren nach einem der Ansprüche 7 bis 10,
**dadurch gekennzeichnet, daß** die Lage des Fokus der ersten Ultraschallwelle (23) bezüglich der Lauffläche (13) derart variiert wird, daß die Schallbündelbreite der ersten Ultraschallwelle (23) in der Übergangszone (19) zwischen Radkranz (11) und Radscheibe (9) veränderlich ist.

12. Verfahren nach einem der Ansprüche 4 bis 7,
**dadurch gekennzeichnet, daß** die zweite Ultraschallwelle (83) durch eine Seite der Radscheibe (9) eingeschallt wird.

13. Verfahren nach Anspruch 12,
**dadurch gekennzeichnet, daß** die zweite Ultraschallwelle (83) in die Radnabe (7) eingeschallt wird.

14. Verfahren nach Anspruch 12 oder 13,
**dadurch gekennzeichnet, daß** die zweite Ultraschallwelle (83) in die Übergangszone (17) zwischen Radscheibe (9) und Radnabe (7) eingeschallt wird.

15. Verfahren nach einem der Ansprüche 4 bis 7,
**dadurch gekennzeichnet, daß** die zweite Ultraschallwelle (73) durch eine Seite des Radkranzes (11) eingeschallt wird.

16. Verfahren nach Anspruch 15,
**dadurch gekennzeichnet, daß** die zweite Ultraschallwelle (73) in die Übergangszone (19) zwischen Radkranz (11) und Radscheibe (9) eingeschallt wird.

17. Verfahren nach einem der Ansprüche 1 bis 16 oder 4 bis 16,
**dadurch gekennzeichnet, daß** die an unterschiedlichen Einschallstellen und/ oder mit unterschiedlichen Einschallrichtungen von der ersten ultraschallwelle bzw. der zweiten Ultraschallwelle erzeugten Empfangssignale bildgebend überlagert werden.

18. Vorrichtung zur Durchführung des Verfahrens nach einem der Ansprüche 1 bis 17,
**gekennzeichnet durch**
einen an der Lauffläche (13) akustisch ankoppelbaren ersten Ultraschall-Gruppenstrahler (21, 31) zur Einschallung einer ersten Schallwelle (23, 33) und
einen an einer Seite der Radscheibe (9) akustisch ankoppelbaren zweiten Ultraschall-Gruppenstrahler (51) zur Einschallung einer zweiten Schallwelle (53), wobei die beiden Ultraschall-Gruppenstrahler (21, 31; 51) derart auf einem gemeinsamen Prüfträger angeordnet sind, dass mit dem ersten Ultraschall-Gruppenstrahler (21, 31) **durch** den Radkranz (11) hindurch in die Radscheibe (9) einschallbar und seine Einschallrichtung in der Radscheibenebene (25) schwenkbar ist und dass mit dem zweiten Ultraschall-Gruppenstrahler (51) in die Radnabe einschallbar ist und seine Einschallrichtung unter einem näherungsweise unveränderten Winkel (α₂) mit einer senkrecht auf der Ebene der Radscheibe (9) stehenden horizontalen Ebene schwenkbar ist, wobei die Ultraschall-Gruppenstrahler (21, 31; 51) relativ zum Eisenbahnrad (1) im wesentlichen kreisförmig um die Rotationsachse (5) des Eisenbahnrads (1) bewegbar sind.

19. Vorrichtung nach Anspruch 18,
**dadurch gekennzeichnet, dass** an dem Prüfträger ein dritter Gruppenstrahler (61) angeordnet ist, der an der Lauffläche (13) akustisch ankoppelbar und zur Einschallung einer dritten Schallwelle (63) ausgebildet ist, wobei deren Einschallrichtung in einer Schwenkebene (62) senkrecht zur Radscheibenebene (25) schwenkbar ist.

20. Vorrichtung nach einem der Anspruch 18 oder 19,
**dadurch gekennzeichnet, dass** an dem Prüfträger ein vierter Gruppenstrahler (71) angeordnet ist, der an einer Seite des Radkranzes (11) akustisch ankoppelbar und zur Einschallung einer vierten Schallwelle (73) ausgebildet ist, wobei deren Einschallrichtung in einer Schwenkebene (62) senkrecht zur Radscheibenebene (25) schwenkbar ist.

21. Vorrichtung nach einem der Ansprüche 18 bis 20,
**dadurch gekennzeichnet, dass** an dem Prüfträger ein fünfter Gruppenstrahler (81) angeordnet ist, der an einer Seite der Radscheibe (9) akustisch ankoppelbar und zur Einschallung einer fünften Schallwelle (83) ausgebildet ist, wobei deren Einschallrichtung in einer Schwenkebene (62) senkrecht zur Radscheibenebene (25) schwenkbar ist.

22. Vorrichtung einem der Ansprüche 18 bis 21, **gekennzeichnet durch** eine Auswerteeinheit, der die Empfangssignale wenigstens eines der Gruppenstrahler (21, 31, 51, 61, 71, 81) zuführbar sind und die die an unterschiedlichen Einschallstellen und/oder mit unterschiedlichen Einschallrichtungen erzeugten Empfangssignale bildgebend überlagert.

## Claims

1. Method for detecting a crack (29A, 29B, 29C) in a railway wheel (1) which is rotatable about an axis of rotation (5), wherein an ultrasonic converter (21, 31) present for acoustically irradiating a first ultrasonic wave (23, 33) is moved relative to the railway wheel (1) substantially in a circular shape about the axis of rotation (5), wherein the first ultrasonic wave (23, 33) is acoustically irradiated into the railway wheel (1) through the running tread (13) and wherein acoustic irradiation takes place through the wheel rim (11) into the wheel disc (9), **characterised in that** the acoustic irradiation direction of the first ultrasonic wave (23, 33) is swivelled in the wheel disc plane (25).

2. Method for detecting a crack (29A, 29B, 29C) in a railway wheel (1) which is rotatable about an axis of rotation (5), wherein an ultrasonic converter (51) present for acoustically irradiating a first ultrasonic wave (53) is moved relative to the railway wheel (1) substantially in a circular shape about the axis of rotation (5), wherein the first ultrasonic wave (53) is acoustically irradiated into the railway wheel (1) and wherein the first ultrasonic wave (53) is acoustically irradiated into the wheel hub (7) through one side of the wheel disc (9), **characterised in that** the acoustic irradiation direction of the first ultrasonic wave (53) is swivelled at an approximately unchanged angle (α₂) to a horizontal plane located perpendicular on the side of the wheel disc (9).

3. Method according to one of claims 1 or 2, **characterised in that** the circular movement is produced by rotation of the rotatably held railway wheel (1) while the ultrasonic converter (21, 31; 51) does not rotate about the axis of rotation (5).

4. Method according to one of claims 1 to 3, **characterised in that**
- a second ultrasonic wave (63, 73, 83) is acoustically irradiated into the railway wheel (1) and an ultrasonic converter (61, 71, 81) present for acoustically irradiating it is moved in the same way as the ultrasonic converter (21, 31) present for acoustically irradiating the first ultrasonic wave (23, 33) and
- the acoustic irradiation direction of the second ultrasonic wave (63, 73, 83) is swivelled perpendicular to the wheel disc plane (25).

5. Method according to claim 4, **characterised in that** the same ultrasonic converter is present for acoustically irradiating the first ultrasonic wave (23, 33; 53) and the second ultrasonic wave (63, 73, 83).

6. Method according to one of claims 1 to 5 or 4 to 5, **characterised in that** the first ultrasonic wave (23) or the second ultrasonic wave is focused electronically.

7. Method according to claim 6, **characterised in that** the position of the focus is varied.

8. Method according to one of claims 4 to 7, **characterised in that** the second ultrasonic wave (63) is acoustically irradiated through the running tread (13).

9. Method according to claim 8, **characterised in that** the second ultrasonic wave (63) is acoustically irradiated into the wheel disc (9) through the wheel rim (11).

10. Method according to one of claims 8 or 9, **characterised in that** the second ultrasonic wave (63) is acoustically irradiated into the transition zone (19) between wheel rim (11) and wheel disc (19).

11. Method according to one of claims 7 to 10, **characterised in that** the position of the focus of the first ultrasonic wave (23) is varied in respect of the running tread (13) in such a way that the ultrasonic beam width of the first ultrasonic wave (23) is changeable in the transition zone (19) between wheel rim (11) and wheel disc (9).

12. Method according to one of claims 4 to 7, **characterised in that** the second ultrasonic wave (83) is acoustically irradiated through one side of the wheel disc (9).

13. Method according to claim 12, **characterised in that** the second ultrasonic wave (83) is acoustically irradiated into the wheel hub (7).

14. Method according to claim 12 or 13, **characterised in that** the second ultrasonic wave (83) is acoustically irradiated into the transition zone (17) between wheel disc (9) and wheel hub (7).

15. Method according to one of claims 4 to 7, **characterised in that** the second ultrasonic wave (73) is acoustically irradiated through one side of the wheel rim (11).

16. Method according to claim 15, **characterised in that** the second ultrasonic wave (73) is acoustically irradiated into the transition zone (19) between wheel rim (11) and wheel disc (9).

17. Method according to one of claims 1 to 16 or 4 to 16, **characterised in that** the receiving signals generated by the first ultrasonic wave or the second ultrasonic wave at different acoustic irradiation points and/or with different acoustic irradiation directions are superimposed by imaging.

18. Device for carrying out the method according to one of claims 1 to 17, **characterised by** a first ultrasonic antenna array (21, 31), which can be acoustically coupled to the running tread (13), for acoustically irradiating a first ultrasonic wave (23, 33) and a second ultrasonic antenna array (51), which can be acoustically coupled to one side of the wheel disc (9), for acoustically irradiating a second ultrasonic wave (53), wherein the two ultrasonic antenna arrays (21, 31; 51) are arranged on a common test carrier in such a way that with the first ultrasonic antenna array (21, 31) it is possible to acoustically irradiate into the wheel disc (9) through the wheel rim (11) and its acoustic radiation direction is swivellable in the wheel disc plane (25) and with the second ultrasonic antenna array (51) it is possible to acoustically irradiate into the wheel hub and its acoustic irradiation direction is swivellable at an approximately unchanged angle (α₂) to a horizontal plane located perpendicular on the plane of the wheel disc (9), wherein the ultrasonic antenna arrays (21, 31; 51) can be moved relative to the railway wheel (1) substantially in the shape of a circle about the axis of rotation (5) of the railway wheel (1).

19. Device according to claim 18, **characterised in that** arranged on the test carrier is a third antenna array (61) which can be acoustically coupled to the running tread (13) and is constructed for acoustically irradiating a third sonic wave (63), wherein its acoustic irradiation direction is swivellable in a swivel plane (62) perpendicular to the wheel disc plane (25).

20. Device according to one of claims 18 or 19, **characterised in that** arranged on the test carrier is a fourth antenna array (71) which can be acoustically coupled to one side of the wheel rim (11) and is constructed for acoustically irradiating a fourth sonic wave (73), wherein its acoustic irradiation direction is swivellable in a swivel plane (62) perpendicular to the wheel disc plane (25).

21. Device according to one of claims 18 to 20, **characterised in that** arranged on the test carrier is a fifth antenna array (81) which can be acoustically coupled to one side of the wheel disc (9) and is constructed for acoustically irradiating a fifth sonic wave (83), wherein its acoustic irradiation direction is swivellable in a swivel plane (62) perpendicular to the wheel disc plane (25).

22. Device according to one of claims 18 to 21, **characterised by** an evaluation unit to which the receiving signals of at least one of the antenna arrays (21, 31, 51, 61, 71, 81) can be fed and which by imaging superimposes the receiving signals generated at different acoustic irradiation points and/or with different acoustic irradiation directions.

## Revendications

1. Procédé pour détecter une fissure (29A, 29B, 29C) dans une roue (1) de véhicule ferroviaire pouvant tourner autour d'un axe (5) de rotalion, un transducteur (21, 31) ultrasonore prévu pour envoyer une première onde (23, 33) ultrasonore étant déplacé par rapport à la roue (1) de véhicule ferroviaire essentiellement circulairement autour de l'axe (5) de rotation, la première onde (23, 33) ultrasonore étant envoyée dans la roue (1) de véhicule ferroviaire par la surface (13) de roulement, et l'envoi atteignant le disque (9) de roue en traversant la jante (11), **caractérisé en ce qu'**on fait pivoter la direction d'envoi de la première onde (23, 33) ultrasonore dans le plan (25) du disque de roue.

2. Procédé pour détecter une fissure (29A, 29B, 29C) dans une roue (1) de véhicule ferroviaire pouvant tourner autour d'un axe (5) de rotation, un transducteur (51) ultrasonore prévu pour envoyer une première onde (53) ultrasonore étant déplacé par rapport à la roue (1) de véhicule ferroviaire essentiellement circulairement autour de l'axe (5) de rotation, la première onde (53) ultrasonore étant envoyée dans la roue (1) de véhicule ferroviaire, et la première onde (53) ultrasonore étant envoyée dans le moyeu (7) de roue par un côté du disque (9) de roue, **caractérisé en ce qu'**on fait pivoter la direction d'envoi de la première onde (53) ultrasonore sous un angle (α₂) approximativement inchangé par rapport à un plan horizontal perpendiculaire au côté du disque (9) de roue.

3. Procédé suivant la revendication 1 ou 2, **caractérisé en ce que**, pour un transducteur (21, 31 ; 51) ultrasonore non rotatif autour de l'axe (5) de rotation, le mouvement circulaire est réalisé par une rotation de la roue (1 ) de véhicule ferroviaire montée tournante.

4. Procédé suivant l'une des revendications 1 à 3, **caractérisé en ce qu'**une deuxième onde (63, 73. 83) ultrasonore est envoyée dans la roue (1) de véhicule ferroviaire, et un transducteur (61, 71, 81) ultrasonore prévu pour l'envoi est déplacé de la même manière que le transducteur (21, 31 ) ultrasonore prévu pour envoyer la première onde (23, 33) ultrasonore, et **en ce qu'**on fait pivoter la direction d'envoi de la deuxième onde (63, 73, 83) ultrasonore perpendiculairement au plan (25) du disque de roue.

5. Procédé suivant la revendication 4, **caractérisé en ce que** le même transducteur ultrasonore est prévu pour irradier la première onde (23, 33 ; 53) ultrasonore et la deuxième onde (63, 73, 83) ultrasonore.

6. Procédé suivant l'une des revendications 1 à 5 ou 4 à 5, **caractérisé en ce que** la première onde (23) ultrasonore et/ou la deuxième onde ultrasonore est focalisée électroniquement.

7. Procédé suivant la revendication 6, **caractérisé en ce qu'**on fait varier la position du foyer.

8. Procédé suivant l'une des revendications 4 à 7, **caractérisé en ce que** la deuxième onde (63) ultrasonore est envoyée par la surface (13) de roulement.

9. Procédé suivant la revendication 8, **caractérisé en ce que** la deuxième onde (63) ultrasonore est envoyée à travers la jante (11) dans le disque (9) de roue.

10. Procédé suivant la revendication 8 ou 9, **caractérisé en ce que** la deuxième onde (63) ultrasonore est envoyée dans la zone (19) de transition entre la jante (11 ) et le disque (9) de roue.

11. Procédé suivant l'une des revendications 7 à 10, **caractérisé en ce qu'**on fait varier la position du foyer de la première onde (23) ultrasonore par rapport à la surface (13) de roulement de telle sorte que la largeur de faisceau de la première onde (23) ultrasonore dans la zone (19) de transition entre la jante (11 ) et le disque (9) de roue est variable.

12. Procédé suivant l'une des revendications 4 à 7, **caractérisé en ce que** la deuxième onde (83) ultrasonore est envoyée par un côté du disque (9) de roue.

13. Procédé suivant la revendication 12, **caractérisé en ce que** la deuxième onde (83) ultrasonore est envoyée dans le moyeu (7) de roue.

14. Procédé suivant la revendication 12 ou 13, **caractérisé en ce que** la deuxième onde (83) ultrasonore est envoyée dans la zone (17) de transition entre le disque (9) de roue et le moyeu (7) de roue.

15. Procédé suivant l'une des revendications 4 à 7, **caractérisé en ce que** la deuxième onde (73) ultrasonore est envoyée par un côté de la jante (11 ).

16. Procédé suivant la revendication 15, **caractérisé en ce que** la deuxième onde (73) ultrasonore est envoyée dans la zone (19) de transition entre la jante (11) et le disque (9) de roue.

17. Procédé suivant l'une des revendications 1 à 16 ou 4 à 16, **caractérisé en ce que** les signaux reçus produits en différents points d'envoi et/ou avec différentes directions d'envoi par la première onde ultrasonore et/ou par la deuxième onde ultrasonore sont superposés, formant ainsi une image.

18. Dispositif pour la mise en oeuvre du procédé suivant l'une des revendications 1 à 17, **caractérisé par**
un premier réseau (21, 31) d'antennes d'émission ultrasonore, pouvant être couplé acoustiquement à la surface (13) de roulement et destiné à irradier une première onde (23, 33) sonore, et
un deuxième réseau (51) d'antennes d'émission ultrasonore, pouvant être couplé acoustiquement à un côté du disque (9) de roue et destiné à irradier une deuxième onde (53) sonore, les deux réseaux (21, 31 ; 51) d'antennes d'émission ultrasonore étant disposés sur un support commun de dispositif de contrôle de telle sorte qu'avec le premier réseau (21, 31) d'antennes d'émission ultrasonore, on peut envoyer des ondes dans le disque (9) de roue à travers la jante (11) et faire pivoter la direction d'envoi dans le plan (25) du disque de roue, et qu'avec le deuxième réseau (51) d'antennes d'émission ultrasonore, on peut envoyer des ondes dans le moyeu de roue et faire pivoter la direction d'envoi sous un angle (α₂) approximativement inchangé par rapport à un plan horizontal perpendiculaire au plan du disque (9) de roue, les réseaux (21, 31 ; 51) d'antennes d'émission ultrasonore pouvant être déplacés par rapport à la roue (1) de véhicule ferroviaire essentiellement circulairement autour de l'axe (5) de rotation de la roue (1) de véhicule ferroviaire.

19. Dispositif suivant la revendication 18, **caractérisé en ce qu'**un troisième réseau (61) d'antennes émettrices est disposé sur le support de dispositif de contrôle, réseau qui peut être couplé acoustiquement à la surface (13) de roulement et est destiné à irradier une troisième onde (63) sonore, dont la direction d'envoi peut être pivoté dans un plan (62) de pivotement perpendiculaire au plan (25) du disque de roue.

20. Dispositif suivant la revendication 18 ou 19, **caractérisé en ce qu'**un quatrième réseau (71) d'antennes émettrices est disposé sur le support de dispositif de contrôle, réseau qui peut être couplé acoustiquement à un côté de la jante (11) et est destiné à irradier une quatrième onde (73) sonore, dont la direction d'envoi peut être pivoté dans un plan (62) de pivotement perpendiculaire au plan (25) du disque de roue.

21. Dispositif suivant l'une des revendications 18 à 20, **caractérisé en ce qu'**un cinquième réseau (81) d'antennes émettrices est disposé sur le support de dispositif de contrôle, réseau qui peut être couplé acoustiquement à un côté du disque (9) de roue et est destiné à irradier une cinquième onde (83) sonore, dont la direction d'envoi peut être pivoté dans un plan (62) de pivotement perpendiculaire au plan (25) du disque de roue.

22. Dispositif suivant l'une des revendications 18 à 21, **caractérisé par** une unité d'interprétation à laquelle peuvent être apportés les signaux reçus d'au moins un des réseaux (21, 31, 51, 61, 71, 81) d'antennes émettrices, et qui superpose les signaux reçus produits en différents points d'envoi et/ou avec différentes directions d'envoi, formant ainsi une image.
